# EUROPEAN PATENT SPECIFICATION

(11) **EP 2 537 013 B1**
(45) Date of publication and mention of the grant of the patent: **20.11.2013**
(21) Application number: 10805343.0
(22) Date of filing: 02.12.2010
(51) Int. Cl.: G01K 1/08, G01K 7/02

(54) **PROCESS OF MANUFACTURING TEMPERATURE PROBES**
VERFAHREN ZUR HERSTELLUNG VON TEMPERATURSONDEN
PROCÉDÉ DE FABRICATION DE CAPTEURS DE TEMPÉRATURE

(30) Priority: 19.02.2010 SI 201000065
(43) Date of publication of application: 26.12.2012
(73) Proprietor: Hidria AET Druzba za proizvodnjo vzignih sistemov in elektronike d.o.o., 5220 Tolmin (SI)
(72) Inventor: VESKOVIC BUKUDUR, Stojana, 5220 Tolmin (SI); MEDJA, Zdenko, 5000 Nova Gorica (SI)
(74) Representative: Macek, Gregor
(86) International application number: PCT/SI2010/000068
(87) International publication number: WO 2011/102810

(56) References cited:
- EP-A2- 0 818 671
- WO-A1-2009/057728
- DE-B3-102006 034 248
- Anonymous: "Sheathed Thermocouples", Thermo-est , 11 February 2010 (2010-02-11), pages 1-12, XP002630173, Retrieved from the Internet: URL:http://www.iter-lorraine.fr/media/arti cle/document/142798_142815_Sheathed_Thermo couples.pdf [retrieved on 2011-03-28]

## Description

The present invention relates to a process of fabricating temperature probes for measuring temperatures within the range of -40 to 1100°C in analytical and medical equipment, in chemical industry equipment, in household appliances, in air conditioning and heating systems, in machine building, and in the automotive industry. A temperature probe is composed of two different metal wires welded together at one end and forming a measuring junction, while the other, open, end is connected to a convenient voltage meter and is called the reference junction. A temperature probe of this type measures the difference in temperature between the measuring and the reference junctions. The two wires are inserted into a closed protective metal sheath, cylindrical in shape. The interstitial spaces between the protective metal sheath and the wire junction, as well as those between the protective sheath and the wires/conductors, are filled with an electrically insulating filler. Besides having a wide measurement range, the temperature probe must also exhibit high accuracy, thermal stability and a short response time. It is also important that its production be economically and environmentally viable. For automotive industry applications, in addition to being resistant to high temperatures and quick changes in temperature, it also must exhibit mechanical resistance such as resistance to shocks and vibrations, and a good chemical resistance to exhaust fumes. The static and dynamic properties of the temperature measurement system are crucially affected by the properties of the metal conductors and of the secondary electronics, and also by the construction of and the materials selected for the mechanical part of the high temperature probe.

### Prior Art

Manufacturing of temperature probes with an electrically insulating filler is generally known in the art. Temperature probes have to satisfy requirements such as precision, fast thermal response, low losses and durability. For specific uses, resistance to aggressive gases and chemicals is also important, while resistance to vibrations and other mechanical factors is required for applications in the automotive, aviation and other industries. In view of the ever tightening demands, manufacturers are forced to make certain compromises in order to ensure product compliance. The technology as taught in the present invention provides a novel solution to the said problem, enabling the product to meet the abovesaid requirements.

Various types of said temperature probes are also disclosed in document "Sheated Thermocouples" from company ThermoEst which can be found on the Internet: URL:http.//www.iterlorraine.fr/media/article/document/142798 -142815 -Shealted-Thermocouples.pdf.

In the majority of prior-art temperature probes, electrofused magnesite is utilized as electrically insulating filler, by feeding required amounts of said magnesite in powder or granulate form into tubes with the aid of a vibrator, or, alternatively, by using extruded brittle tubes of magnesium or aluminum oxide, each having a pair of holes into which the two wires of the thermocouple are inserted. The brittle tubes, together with the wire pairs, are then inserted into a protective metal tube; subsequently, the two wires are welded together, so that at the bottom of the thermocouple an empty, usually air-containing, space is formed, acting as a thermal insulator and preventing good thermal conduction. During the sinking process the tubes are crushed into basic grains, with air and other gases being expelled from them, so that the filler is distributed as evenly as possible between the wires and the welded junction, as well as between the protective metal tube and the welded junction. Owing to pressure, materials expand during the sinking process, because of which the wires and the welded junctions may become deformed, the concentricity of the wires relative to the filler and to the outer protective tube degrades, the position of the welded junction loses concentricity too, also the distance to the bottom of the probe changes and can not be kept within tight tolerances. All this combines to increase the accuracy tolerances relative to temperature and to response speed. Patents teaching thermocouples fashioned from two types of fillers of different thermal conductivities are already known in the art; however, overmolding technology allows probes having the measuring and the stem portion filled with different fillers to be manufactured with ease.

It is the object and purpose of the present invention to provide a process of manufacturing temperature probes ensuring a good thermal contact between the sheath and the welded measuring junction, preventing deformations of the measuring junction, and ensuring a precise positioning of the measuring junction in the sheath.

In accordance with the invention, said object is achieved with the process of manufacturing temperature probes as per the independent patent claims.

### Description of the Invention

The invention discloses the fashioning of high-temperature probes used for measuring high temperatures from -40 to +1100°C in different branches of industry. The choice of dimensions, the component materials used, and the construction of the mechanical part greatly affect the achievable properties, such as response time, accuracy, time stability, chemical and mechanical resistance.

The invention shall be described with reference to the accompanying drawings, representing:
Figure 1: a cross section of the straight protective metal sheath;
Figure 2: a cross section of the conical protective metal sheath;
Figure 3: a cross section of the ceramic insulator with a bore and with a corrugated outer surface;
Figure 4: a cross section of the ceramic insulator with a conical lower portion;
Figure 5: a cross section of the overmolded measuring portion and the ceramic insulators fitted over the wires of the temperature probe;

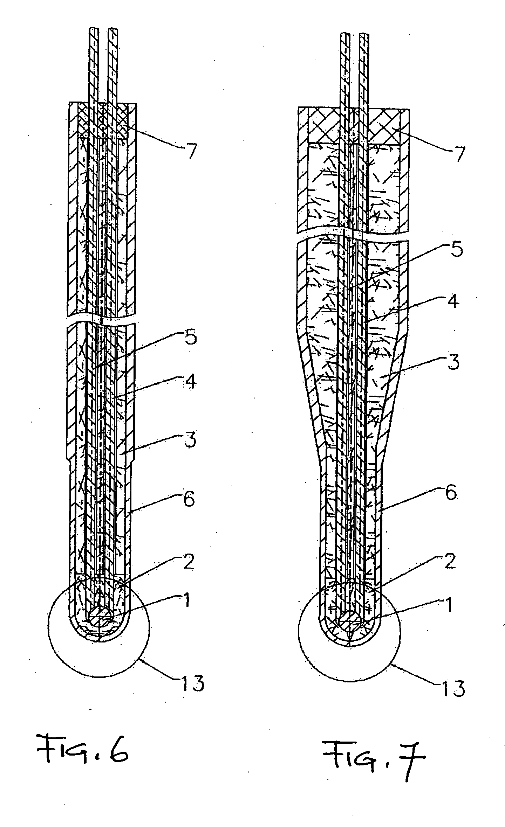

Figure 6: a cross section of the temperature probe disclosed by the invention;
Figure 7: a cross section of the temperature probe with a conical lower portion.

The temperature probe according to the invention is composed of two wires 4 and 5, which are made of different alloys and laser spot welded together at one end. The welded junction 1, forming the measuring portion 13 of the probe, and the connecting wires 4 and 5, forming the stem portion of the probe, are inserted into the electrically insulating filler composed of a material 2 of higher thermal conductivity, and a material 3 of lower thermal conductivity. The filler acts as electrical insulation and also has the purpose of fixing the welded junction 1 and the connecting wires 4, 5 in place, as well as forming a mechanical support against vibrations and other mechanical factors acting on the temperature probe. The electrically insulating filler also has to transfer heat well from the medium whose temperature is being measured, across the protective metal sheath 6, to the measuring portion 13 of the probe. Good thermal conduction in the measuring portion 13 of the temperature probe ensures that the response time to temperature variations will be short. If an electrically insulating filler of high thermal conductivity is used throughout the temperature probe, the heat transfer rate will increase, but heat accumulation in the measuring portion 13 as such will also increase, potentially making the probe operate slower. On the other hand, by using a material 3 of lower thermal conductivity in the stem portion of the temperature probe, the heat can be drawn from the measuring portion 13 isolated with material 2 of higher thermal conductivity, to the stem portion of the probe where material 3 of lower thermal conductivity is located. For the probe to have fast response times as required, better thermal conductivity should be ensured to the measuring portion 13 of the probe, as opposed to the stem portion of the probe which is to act as a thermal insulator.

Therefore, the electrically insulating filler is composed of two materials having different thermal conductivities: material 2 of higher thermal conductivity is used for insulating the welded junction 1 of the temperature probe, whereas material 3 of lower thermal conductivity is used for insulating the stem portion of the temperature probe. This solution makes sure that the response time of the temperature probe is short, while at the same time preventing the temperature from spreading too quickly from the measuring portion 13 of the probe to the stem portion of the probe.

Apart from the materials utilized, the response time of the thermocouple is also affected by the construction and the dimensions of the probe containing the measuring portion 13. The measuring portion 13 of the probe has to be shaped such that the distances between the protective sheath 6 and the welded junction 1 are as short as possible and their thickness as uniform as possible, which means that the welded junction 1 of the wires 4,5 forming the measuring portion 13 of the probe has to be completely enclosed within a thin layer of electrically insulating filler, which must be of a uniform thickness and have the densest structure possible, with no inclusions and no bubbles of air and other gases, while its density must be distributed homogeneously. If the welded junction 1 of the probe is not completely enclosed within the insulating filler, the heat transfer from the medium to the measuring portion 13 degrades substantially, making the temperature probe much slower to react to temperature variations. According to the novel manufacturing process as set forth in the invention, the welded junction 1 of the temperature probe with two wires 4 and 5 which are made of different alloys is overmolded in the electrically insulating ceramic filler.

The manufacturing process as per the invention consists in overmolding the welded junction 1 of the temperature probe with a thermoplastic ceramic suspension, prepared from ceramic powders of AlN, BN or electrofused MgO, or a mixture of said powders, which have high thermal conductivities. On the probe's welded junction 1, overmolded with the material 2 of higher thermal conductivity, ceramic insulators of material 3 of lower thermal conductivity are fitted over the connecting wires of the temperature probe in the stem portion of the sheath 6, said ceramic insulators having different lengths and two holes and being manufactured using low-pressure injection molding technology from a material 3 of lower thermal conductivity such as Al₂O₃.

A two-component overmolding technology manufacturing process may likewise be used, by means of which the insulating layer enclosing the welded junction 1 and the two wires 4 and 5 is fashioned in such a manner that, first, the welded junction 1 is overmolded with the material 2 of higher thermal conductivity, and, in a subsequent stage, the connecting wires 4,5 in the stem portion of the sheath 6 are overmolded with the material 3 of lower thermal conductivity, specifically by inserting the welded junction 1 together with the two connecting wires into the same tool/mold, and then overmolding both parts of the probe.

With the two foregoing manufacturing processes, correct positioning of the welded junction 1 and of the two wires 4 and 5 of the temperature probe is ensured, concentricity around the wires is improved, the symmetry of the product is enhanced, the density of the electrically insulating filler is distributed uniformly, and thermal conductivity is improved, resulting in a better transfer of heat from the medium to the temperature probe.

With the proposed two solutions, the distance between the outer protective sheath 6 and the welded junction 1 is decreased, the concentricity - the uniformity of the radii - around the welded junction 1 is ensured, the distance between the measuring portion 13 of the probe and the bottom of the protective sheath 8 is repeatable and conveniently small owing to the positioning of the junction within the tool, the symmetry of the product is improved, the density of the insulating layer is uniform, heat transfer through the insulating tube is better; the conduction from the medium to the measuring portion 13 is improved, losses at the temperature probe are smaller.

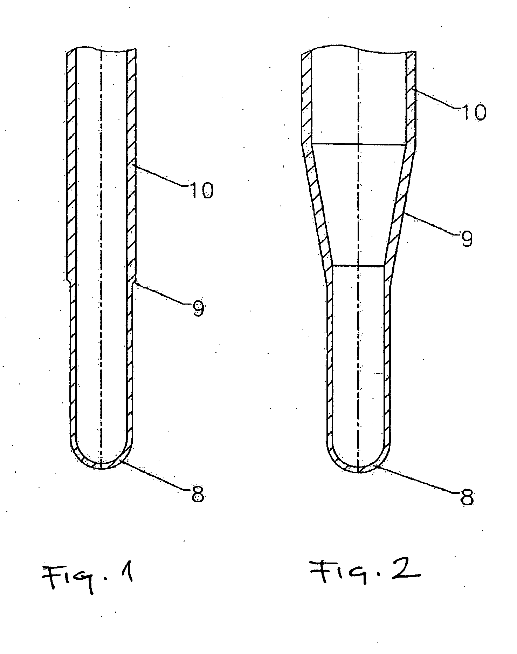

The high temperature probe, wherein the welded junction 1 is electrically insulated with a material 2 of higher thermal conductivity, such as AlN, BN, or MgO, the connecting wires 4, 5 of the temperature probe being insulated with a material 3 of lower thermal conductivity such as Al₂O₃, is inserted into the finished form of the protective metal sheath 6. Thus, the two-component or one-component overmolding is carried out in the tool/mold, whereupon the two-component overmolded or one-component overmolded wires 4, 5 with ceramic insulators fitted thereon are inserted into the protective metal sheaths 6. Given that the protective metal sheaths 6 are to be exposed to high temperatures and to various chemicals such as exhaust fumes, they are manufactured from temperature resistant nickel alloys, such as Inconel 600, 601 or 602, which are generally known as being highly resistant to oxidation and corrosion. The protective metal sheath 6 is manufactured from an integral piece of tube 10 having an outer diameter of 3.0 - 4.0 mm and a wall thickness of 0.3 - 0.6 mm, preferably 0.5 mm. In cases when extremely short response times and higher accuracy of the probe is required, the wall thickness of the bottom measuring portion 8 of the sheath is reduced to 0.2 - 0.4 mm, preferably 0.3 mm; the transitional portion 9 of the tube with the thicker wall transitioning into the thinner wall is represented in Figures 1 and 2 for the straight and the conical protective metal sheath 6, respectively. By having a thicker protective sheath 6 in the upper portion of the temperature probe, the mechanical strength of the probe is increased. The diminished wall thickness in the lower measuring portion is achieved by subjecting the protective sheath 6 to external mechanical processing.

To close the tube at one end, where the welded junction 1, which is to say, the measuring portion 13, is inserted, sinking and welding technology is utilized. In a like manner, manufacturing of protective sheaths 6 of different dimensions and different wall thicknesses, adapted to the final shape of the temperature probe is possible. The overall shape of the protective sheath 6 may be straight or conical, while the shape of its lower part wherein the measuring portion is located is rounded off, as shown in Figures 1 and 2.

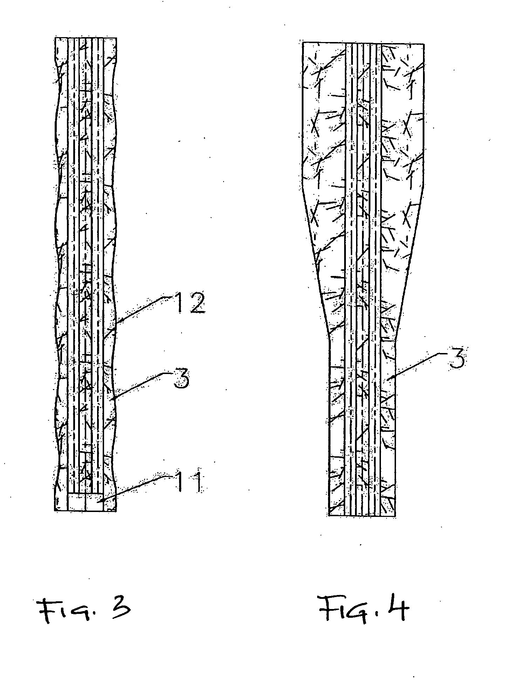

The ceramic filler, filling the interstice between the metal protective sheath 6 and the welded junction 1, and that between the metal protective sheath 6 and the two connecting wires 4 and 5, may be composed of different ceramic materials, such as silicates, preferably steatite, cordierite and/or mullite, oxides, preferably Al₂O₃, ZrO₂, MgO, or non-oxides, preferably AlN, BN, SiC or their combinations, or of two-material mixtures. The technology used for overmolding the welded junction and fabricating the ceramic insulators from material 3 for insulating the stem portion of the probe, that is the connecting wires 4, 5, is low-pressure injection molding of a ceramic thermoplastic suspension. It is an advantage of the said process that, owing to low injection pressure, low viscosities, as well as low suspension speeds, the deformation of the welded junction 1 and the two connecting wires 4, 5 is negligible. In addition, the position of both wires does not change during the injection molding process. It is a further advantage of the said process that it allows final injection molded shapes to be shaped with dimensional tolerances of ± 1% of the nominal dimensions. Depending on the intended use, the mounting requirements, the required accuracy and response speed, the ceramic tubes may be of a straight, conical, or corrugated external shape, as shown in Figures 3 and 4. Utilizing typically shaped ceramic insulators with a corrugated surface 12 improves the crushing of the material into basic grains of insulating material when the assembled product is sunk, reduces the sinking forces, and allows for a smaller clearance between the ceramic insulator and the protective metal sheath prior to sinking. The shape of the ceramic insulator of the tube in the portion where the probe wires are connected may be adapted to the shape of the measuring point. That way, the speed of response of the temperature probe is additionally improved.

The inner shape of the ceramic insulator may be tapered toward the tip, and may also be in the form of a bore 11, as shown in Figure 3. With the proposed technology, it is also possible to assemble insulators of arbitrary length from a variety of materials, enabling very long temperature probes to be fabricated.

### Manufacturing Process

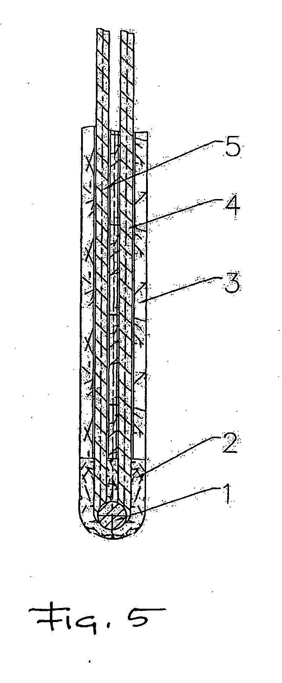

According to the process disclosed herein, two temperature probe wires 4 and 5, made of two different alloys NiCrSi and NiSi (type N), and NiCr and Ni (type K), respectively, are laser-welded together, so that a quality welded junction 1 for a temperature probe is obtained. The welded junction 1, together with the two connecting wires 4 and 5, is inserted into a metal tool for ceramic injection molding and positioned therein. Using low pressures, a ceramic suspension of low viscosity, adapted for the selected molding technology, is overmolded and spread uniformly around the measuring portion 13 of the probe, as shown in Figure 5. The material used for overmolding the temperature probe is a ceramic thermoplastic suspension, composed of material 2 of higher thermal conductivity, such as electrofused MgO, or AlN, or BN. The overmolding of the temperature probe junction together with the two connecting wires 4, 5 is carried out at a temperature of 65 - 70°C and at a pressure of 2 - 6 bar, the tool temperature being 25°C. After the welded junction 1 with the ceramic insulating filler in the tool has cooled down, it is ejected from the tool by the ejector. In the following stage of the process, the binder is thermally removed from the ceramic insulating filler, which is presintered in an electric furnace, whereby sufficient density and mechanical strength for subsequent mounting is achieved. During the next stage, electrically insulating ceramic tubes are fabricated from a material 3 of lower thermal conductivity, such as aluminum oxide. The ceramic powder of adequate chemical composition and granularity is then air-dried for at least 12 h at a temperature of 105°C, and integrated with thermoplastic binders and surfactants in convenient weight ratios. The binders are dosed and melted in a heated ball mill with ceramic balls, to which the ceramic powder, or the mixture of ceramic powders, is gradually added until viscosity suitable for low-pressure injection molding is achieved. The ceramic suspension is stirred and homogenized at a temperature of 80 - 90°C. After stirring for 5 - 10 hours the suspension is vacuumed and thermo stated to a temperature of 65 - 70°C. The suspension is injected into a single-cavity or multi-cavity metal model having the shape of an insulator or insulators of arbitrary dimensions and shapes, at a pressure of 0.6 Mpa.

With the added possibility of manufacturing the temperature probe by means of two-component overmolding, the welded junction 1, together with the two connecting wires 4 and 5, is inserted into a metal tool/die for injection molding ceramics, wherein both portions of the probe are positioned. The tool is made such as to allow the welded junction 1 to be overmolded first, with a ceramic thermoplastic suspension composed of a material 2 of higher thermal conductivity, such as electrofused MgO or AlN or BN. Once the suspension in the tool has cooled down and hardened, the two connected wires 4, 5 of the thermocouple are overmolded through a second injection point of the same tool with a ceramic thermoplastic suspension composed of a material 3 of lower thermal conductivity such as Al₂O₃. It is important that the particles of both suspensions be of the same size, because of shrinkages inherent to injection molding and to subsequent presintering. Both the suspensions are prepared according to the procedure described above; likewise, the injection molding conditions are the same as described in the first proposed manufacturing process. Once the two insulating fillers in the tool have hardened and cooled down, the ejector removes the entire product from the tool.

After shaping, a thermal procedure is applied to remove the binder, and presintering is applied to ensure that the ceramic insulators have sufficient strength for assembling, as well as to allow crushing and additional densification during the sinking process. To protect the metal wires from oxidizing, the thermal procedure is carried out in an electric furnace in a protective atmosphere.

After expelling the binder and presintering, the welded junction 1, either overmolded in the electrical insulating filler together with the connecting wires 4 and 5 with ceramic insulators fitted over, or overmolded with the connecting wires 4 and 5 using a two-component procedure, is inserted into the metal sheath 6 made of Inconel 600, 601 or 602. The protective tube is sealed by means of a PTFE sealant 7, which makes sure that the position of the welded junction 1 and of both the connecting wires 4 and 5 does not change during sinking, the sealant also preventing the electrically insulating filler, which is very hygroscopic, from getting damp again. After sealing, low-pressure sinking of the temperature probes (reducing the diameter by a mere 0.2 mm) allows the clearance between the external protective sheath 1 and the ceramic insulators to be eliminated, while also removing various residual gases from the surfaces of the tubes and from inside the ceramic insulators, as well as increasing the density of the ceramic filler and enhancing the homogeneity thereof. With said process the properties of the temperature probe are improved.

In conclusion, the process of the invention is characterized in that the two or one-component overmolding is carried out in the tool/die, whereupon the two-component overmolded wires 4, 5 , or the one-component overmolded wires 4, 5 with ceramic insulators fitted thereon, are inserted into the protective metal sheaths 6. The process comprises low-pressure injection molding of ceramic insulators of desired shapes and dimensions, either with or without a bore 11, having either a smooth or a corrugated surface 12, from a material 3 of lower thermal conductivity such as aluminum oxide, removing the binder and presintering in a protective atmosphere at a temperature of 800 to 1200°C, preferably from 950 to 1100°C in an electric furnace, welding the two wires 4 and 5 of two different alloys NiCrSi and NiSi (type N), and NiCr and Ni (type K), respectively, fashioning closed protective sheaths 6 having desired diameters and different wall thicknesses, preferably 0.3 mm in the measuring portion 13 and preferably 0.5 mm in the stem portion, inserting and positioning the welded wires into the injection molding tool and overmolding the welded junction 1 of the measuring portion 13 of the temperature probe with materials 2 of higher thermal conductivity, such as electrofused magnesite or aluminum nitride or boron nitride or mixtures thereof, in the case of two-component injection molding also injection molding the connecting wires 4 and 5 with a material 3 of lower thermal conductivity, preferably Al₂O₃, removing from the tool, removing the binder and presintering in a protective atmosphere at a temperature of 800 to 1200°C, preferably from 950 to 1100°C in an electric furnace, in the case of one-component injection molding, assembling the ceramic insulators, inserting into the closed protective sheath 6, sealing with a PTFE sealant 7 and sinking the high temperature probe, thereby ensuring a high density of the filler, an accurate positioning of the wires 4 and 5 and of the welded junction 1, as well as a fast thermal response of the probe. Likewise within the scope of the invention is a temperature probe manufactured in accordance with the process of the invention.

With the manufacturing process according to the invention, the following is ensured: a high speed of response during the temperature measurement, greater accuracy, reliability, high temperature stability and durability, improved control over the concentricity - the uniformity of the radii - around the junction, improved symmetry of the product, uniform density of the insulating filler, better transfer of heat through the insulating sheath, improved conduction from the medium to the probe, smaller losses at the temperature probe, reduced transfer from the insulator to the housing, as well as high temperature stability, durability, reliability, measurement sensitivity.

## Claims

1. Process of manufacturing temperature probes in the temperature range from -40 to 1100°C, wherein the probe is composed of two wires (4, 5) made of different alloys, laser spot welded together at one end and positioned in a metal sheath (6) with ceramic insulating filler, **characterized in that** two-component or one-component overmolding is carried out in a tool/die, whereupon the two-component overmolded wires (4, 5), or the one-component overmolded wires (4, 5) with ceramic insulators fitted thereon, are inserted into protective metal sheaths (6).

2. Process according to Claim 1, **characterized in that** it comprises:low-pressure injection molding of ceramic insulators of desired shapes and dimensions from a material (3) of lower thermal conductivity such as aluminum oxide, removing the binder and presintering in a protective atmosphere at a temperature of 800 to 1200°C, preferably from 950 to 1100°C in an electric furnace, welding the two wires (4 and 5) of two different alloys NiCrSi and Nisi (type N), and NiCr and Ni (type K), respectively, fashioning closed protective sheaths (6) having desired diameters and different wall thicknesses, preferably 0.3 mm in the measuring portion (13) and preferably 0.5 mm in the stem portion, inserting and positioning the welded wires (4, 5) into the injection molding tool and overmolding the welded junction (1) of the measuring portion (13) of the temperature probe with materials (2) of high thermal conductivity, such as electrofused magnesite or aluminum nitride or boron nitride or mixtures thereof, in the case of two-component injection molding also injection molding the connecting wires (4 and 5) with a material 3 of lower thermal conductivity, preferably Al₂O₃, removing from the tool, removing the binder and presintering in a protective atmosphere at a temperature of 800 to 1200°C, preferably from 950 to 1100°C in an electric furnace, in the case of one-component injection molding assembling the ceramic insulators, inserting into the closed protective sheath (6), sealing it with a PTFE sealant (7), sinking the high temperature probe, thereby ensuring a high density of the filler, an accurate positioning of the wires (4 and 5) and of the welded junction (1), as well as a fast thermal response of the probe.

## Patentansprüche

1. Verfahren zur Herstellung von Temperatursonden im Temperaturbereich zwischen -40°C und 1100°C, wobei die Sonde aus zwei, aus unterschiedlichen Legierungen hergestellten, Drähten (4, 5) besteht, wobei der Laserspot an einem Ende verschweißt und mit einem Keramikdämmstoff in einer Metallhülle (6) angeordnet wird, **dadurch gekennzeichnet, dass** die Zweikomponenten- oder Einkomponenten-Überspritzung in einer Modeliform/Kokille durchgeführt wird, wonach die beiden darauf platzierten überspritzten Zweikomponentendrähte (4, 5) oder die überspitzten Einkomponentendrähte (4, 5) mit angeordneten Keramik-Dämmstoffen in die Metallschutzhülle (6) eingebracht werden.

2. Verfahren nach Anspruch 1, **dadurch gekennzeichnet, dass** es folgendes umfasst: Niederdruckspritzgießen von Keramikdämmstoffen in die gewünschten Formen und Dimensionen aus einem Stoff (3) mit niedriger Wärmeleitfähigkeit, wie etwa Aluminiumoxid, Entfernung des Bindemittels und Vorsinterung in einer Schutzatmosphäre bei Temperaturen zwischen 800°C und 1200°C, vorzugsweise bei 950°C bis 1100°C in einem Elektroofen, Verschweißen von beiden Drähten (4 und 5) aus zwei unterschiedlichen Legierungen NiCrSi und NiSi (Typ N) bzw. NiCr und Ni (Typ K), Formen von geschlossenen Schutzhülsen (6), die gewünschte Durchmesser und verschiedene Wandstärken, vorzugsweise 0,3 mm im Messteil (13) und 0,5 mm im Schaftteil aufweisen, Einführung und Positionierung von verschweißten Drähten (4, 5) in das Spritzgießwerkzeug und Überspritzen der Schweißverbindung (1) im Messteil (13) der Temperatursonde mit Stoffen (2) von hoher Wärmeleitfähigkeit, wie zum Beispiel elektrisch geschmolzener Magnesit oder Aluminiumnitrid oder Bornitrid oder eine Mischung davon, im Falle des Zweikomponentenspritzgießens auch Spritzgießen von Verbindungsdrähten (4 und 5) mit einem Stoff (3) mit niedriger Wärmeleitfähigkeit, vorzugsweise Al₂O₃, Entfernung des Werkzeugs, Entfernung des Bindemittels und Vorsinterung in einer Schutzatmosphäre bei Temperaturen zwischen 800°C und 1200°C, vorzugsweise bei 950°C bis 1100°C in einem Elektroofen, im Falle des Einkomponentenspritzgießens Zusammenfügen von Keramikdämmstoffen, Einführung in die geschlossene Schutzhülle (6), Abdichtung derselben mit einem PTFE-Abdichtmittel (7), Reduzieren der Hochtemperatursonde, wodurch eine hohe Dichte des Füllstoffes, eine präzise Positionierung der Drähte (4 und 5) und der Schweißverbindung (1) sowie eine schnelle thermische Reaktion der Sonde sichergestellt werden.

## Revendications

1. Procédé de fabrication de capteurs de température dans la gamme de température de -40°C jusqu'à 1100°C, le capteur étant composé de deux fils métalliques (4, 5) fabriqués en alliages différents, le spot laser étant soudé à un bout et positionné dans un manchon métalique (6) avec un matériau céramique isolant, **caracterisé en ce que** le surmoulage par injection de deux composants ou d'un composant est effectué dans un outil/une moule, et après les fils surmoulés de deux composants (4, 5) ou les fils surmoulés d'un composant, avec les matériaux céramiques isolants étant installés ci-dessus, sont insérés dans les manchons métaliques protectifs (6).

2. Procédé selon la revendication 1, **caractérisé en ce qu'il** comprend : moulage par injection basse pression d'isolants céramiques de formes et dimensions désirés d'un materiau de conductivité thermique basse tel que l'alumine, enlevement du liant et pre-frittage dans une atmosphère protective à une température de 800°C jusqu'à 1200°C, de préférance de 950°C jusqu'à 1100°C dans un fourneau électrique, soudage de deux fils métalliques (4 et 5) de deux alliages différents NiCrSi et NiSi (type N) et NiCr et Ni (type K) respectivement, façonnage de manchons protectifs fermés (6) ayant les diamètres désirés et les épaisseurs du mur différentes, de préférence 0,3 mm dans la portion de mesurage (13) et de préférence 0,5 mm dans la portion de la tige, insertion et positionnement des fils soudés (4, 5) dans l'outil de moulage par injection et surmoulage de la jonction soudée (1) de la portion de mesurage (13) du capteur de température avec les matériaux (2) à haute conductivité thermique, tel que la magnésite électriquement fondue ou la nitrure d'aluminium ou la nitrure de bore ou leur mélanges, au cas du moulage par injection de deux composants aussi le moulage par injection de fils reliants (4 et 5) avec un matériau (3) à conductivité thermique plus basse, de préférence Al₂O₃, enlevement de l'outil, enlevement du liant et pre-frittage dans l'atmosphère protective à une température de 800°C jusqu'à 1200°C, de préférence de 950°C jusqu'à 1100°C dans un fourneau électrique, au cas du moulage par injection d'un composant assemblage d'isolants céramiques, insertion dans le manchon protectif fermé (6), étanchement du même avec un agent d'étanchement PTFE (7), réduction du capteur haute température, assurant ainsi une haute densité du matériel de remplissage, un positionnement précis des fils (4 et 5) et du jonction soudée (1) et aussi une réponse thermique rapide du capteur.
